# EUROPÄISCHE PATENTSCHRIFT

(11) **EP 2 134 979 B1**
(45) Veröffentlichungstag und Bekanntmachung des Hinweises auf die Patenterteilung: **16.03.2011**
(21) Anmeldenummer: 08773805.0
(22) Anmeldetag: 02.07.2008
(51) Int. Cl.: F16C 17/03, F16C 17/06, F16C 17/10, F16C 33/10, F16C 39/06

(54) **HYBRIDLAGER UND VERFAHREN ZU DESSEN HERSTELLUNG**
HYBRID BEARING AND METHOD FOR MANUFACTURING IT
PALIER HYBRIDE ET PROCÉDÉ POUR SA FABRICATION

(30) Priorität: 10.07.2007 DE 102007032443
(43) Veröffentlichungstag der Anmeldung: 23.12.2009
(73) Patentinhaber: Voith Patent GmbH, 89522 Heidenheim (DE)
(72) Erfinder: PERNER, Norman, 89233 Neu-Ulm (DE); HOLSTEIN, Benjamin, 89520 Heidenheim (DE)
(74) Vertreter: Dr. Weitzel & Partner
(86) Internationale Anmeldenummer: PCT/EP2008/005384
(87) Internationale Veröffentlichungsnummer: WO 2009/007044

(56) Entgegenhaltungen:
- JP-A- 8 014 255
- JP-A- 2002 364 639
- US-A- 4 988 906
- US-A- 5 098 203
- US-B1- 6 424 067

## Beschreibung

Die Erfindung betrifft ein Hybridlager in Form einer Kombination aus einem Gleitlager und einem Magnetlager, insbesondere zur Verwendung für die Lagerung der umlaufenden Einheiten einer tauchenden Energieerzeugungsanlage, sowie ein Verfahren zu dessen Herstellung.

Tauchende Energieerzeugungsanlagen dienen der Energiegewinnung, insbesondere der Stromerzeugung, aus einer Gewässer- oder Meeresströmung, wobei für letztere Gezeitenströmungen in Frage kommen. In der vorliegenden Anmeldung wird unter einer tauchenden Energieerzeugungsanlage eine frei umströmte, an einer Tragstruktur angebrachte Turbinen-/Generatoreinheit verstanden, für die keine Dammstruktur notwendig ist. Die Tragstruktur kann entweder auf dem Gewässergrund fundamentiert sein oder alternativ wird eine schwimmfähige Einheit verwendet, die wiederum mittels einer Verankerung in Position gehalten werden kann. Die umlaufende Wasserturbine einer solchen Energieerzeugungsanlage muss so gelagert sein, dass die aufgenommenen Strömungskräfte und das Gewicht der Wasserturbine einschließlich der mit dieser verbundenen Wellenkomponenten sicher abgestützt werden.

Im Fall einer direkt angetriebenen, tauchenden Energieerzeugungsanlage ist zwischen dem elektrischen Generator und der Wasserturbine kein Getriebe zwischengeschaltet, sodass die Läufereinheit des elektrischen Generators mit der Wasserturbine und insbesondere einer nabenförmigen Stützstruktur eine Baueinheit bildet. Folglich müssen bei dieser Bauform die durch den elektrischen Generator bewirkten Kräfte zusätzlich durch die Lager für die Baueinheit aus Wasserturbine und Generatorläufer abgefangen werden.

Für tauchende Energieerzeugungsanlagen besteht die Notwendigkeit, diese robust auszubilden, um die sich meist schwierig gestaltenden Wartungsarbeiten auf ein Mindestmaß beschränken oder gänzlich vermeiden zu können. Hieraus ergibt sich als Anforderung für die Lager einer solchen Anlage, diese bei den herrschenden Umgebungsbedingungen in einer meist Sedimente und Sand transportierenden Strömung ausfallsicher auszubilden. Im Fall einer in einer Meeresströmung angeordneten, tauchenden Energieerzeugungsanlage kommt zu dieser Schwierigkeit die Problematik einer korrosiven Salzwasserumgebung hinzu. Die genannten Anforderungen für die Lager treten allerdings auch bei anderen Schwerlastmaschinen auf, die insbesondere für den Einsatz unter rauen Umgebungsbedingungen vorgesehen sind.

Lager für die Verwendung in tauchenden Energieerzeugungsanlagen sind vielfach als ein- oder mehrreihige Wälzlager ausgebildet. Allerdings sind die in Wälzlagern verwendeten Wälzkörper anfällig gegen die abrasive Wirkung, die durch in das Lager eindringende Sedimente bewirkt wird. Entsprechend ist ein hoher Aufwand zur Abdichtung solcher Lager notwendig. Um die Lager robust auszubilden, wurde beispielsweise durch die US 2007 0007772 A1 vorgeschlagen, ein Gleitlager zu verwenden, in dem mittels einer Pumpe Wasser zur Ausbildung eines Wasserfilms zwischen die Lagerflächen eingepresst wird. Mit Hilfe dieses Lagers wird ein aus zwei Rotoren bestehender Außenläufer umfassend eine Anordnung von Permanentmagneten im jeweiligen Tragring an einem Gondelkörper gelagert, in dem die Statorkomponenten untergebracht sind. Nachteilig an einem solchen hydrodynamischen Gleitlager ist allerdings, dass auch bei groß ausgelegten Pumpen bei geringen Umlaufgeschwindigkeiten der Wasserturbine in vielen Fällen ein hinreichend stabiler Schmiermittelfilm zwischen den Lagerflächen nicht permanent aufrechterhalten werden kann und folglich im Lager ein Mischreibungszustand mit Anteilen von Festkörperreibung und Flüssigkeitsreibung vorliegen wird, was zu entsprechenden Lagerverlusten führt. Ein weiterer Nachteil besteht darin, dass die dem Lager zugeordneten Pumpeneinheiten leistungsstark ausgebildet sein müssen und darüber hinaus zusätzliche Komponenten mit entsprechender Ausfallwahrscheinlichkeit für die tauchende Energieerzeugungsanlage darstellen.

Ferner beschreibt die US 7,190,087 B2 für eine gattungsgemäße, tauchende Energieerzeugungsanlage unterschiedliche Gestaltungen von Axial- und Radiallagern für eine die Wasserturbine und die Komponenten des Generatorläufers tragende Nabe. Neben Wälz- und Gleitlagern wird vorgeschlagen, die Lager mittels Permanentmagneten zu realisieren. Die Schwierigkeit bei einem solchen Ansatz besteht darin, auch bei hohen Lagerbelastungen das Lager zu stabilisieren, wobei zu beachten ist, dass ein magnetisches Lager ein schwingfähiges System darstellt. Wird das Konzept eines herkömmlichen Gleitlagers mit dem eines passiven Magnetlagers kombiniert, so kann die Verschleißfestigkeit verbessert werden. Für kleinbauende Hydromaschinen, wie einem Spaltrohrmotor in einer Heizungsumwälzpumpe, wurde dies bereits durch die DD 241288 A1 vorgeschlagen, ferner werden durch die DD 246597 A1 und die DE 3217341 A1 derartige Hybridlager offenbart. Für großbauende Lager wie jene von tauchenden Energieerzeugungsanlagen, insbesondere direkt getriebenen, liegt ein typischer Lagerdurchmesser über zwei Meter vor, sodass die in den voranstehend aufgeführten Druckschriften vorgeschlagenen Lagerschalen aus einem Magnetmaterial, insbesondere aus einem Hartferrit, bisher noch nicht in Betracht gezogen wurden. Die Schwierigkeit besteht darin, großbauende Lagerschalen, die gleichzeitig für hohe Lagerbelastungen ausgelegt sind, mit hinreichender Präzision und gleichzeitig wirtschaftlich zu fertigen.

Ein Hybridlager mit den Merkmalen des Oberbegriffs des Anspruchs 1 ist aus US 4988 904 bekannt.

Der Erfindung liegt die Aufgabe zugrunde, ein Lager anzugeben, das für große Lagerbelastungen ausgelegt werden kann, großbauend ausführbar ist und gleichzeitig konstruktiv und fertigungstechnisch einfach ist. Darüber hinaus muss das Lager insbesondere für die Anwendung in einer tauchenden Energieerzeugungsanlage auch dann verschleißfrei sein, wenn in den Lagerspalt Fremdkörper aus der Umgebung eindringen oder die Lagerkomponenten einem korrosiven Einfluss ausgesetzt sind. Das Lager sollte sich ferner dadurch auszeichnen, dass auch bei geringen Umlaufgeschwindigkeiten geringe Reibkoeffizienten vorliegen.

Ausgangspunkt der Erfindung ist ein Gleitlager mit einer ersten und einer zweiten Lagerschale, wobei bevorzugt im Lagerspalt zwischen diesen beiden Lagerschalen ein Schmiermittel vorliegt. Dieses kann zähflüssige Eigenschaften aufweisen, wobei ein Fett oder ein Öl verwendet werden kann. Allerdings ist auch die Verwendung niedrigviskoser Schmiermittel, beispielsweise von Wasser, möglich, was sich insbesondere für den bevorzugten Anwendungsfall bei tauchenden Energieerzeugungsanlagen anbietet. Das Lager kann gegen die Außenumgebung mittels eines Dichtelements abgedichtet werden, alternativ kann mit einer Verlustschmierung gearbeitet werden.

Um bereits bei geringen Umlaufgeschwindigkeiten den Bereich von Festkörper-und Mischreibung zu verlassen und aufgrund der hydrodynamischen Wirkung des Schmiermittels im Lagerspalt den Bereich der Flüssigkeitsreibung mit einem zugeordneten, kleinen Reibkoeffizient zu erreichen, wird das Gleitlager durch ein Magnetlager ergänzt. Dieses Hybridlager wird erfindungsgemäß so realisiert, dass die einander zugewandten Lagerschalen (erste und zweite Lagerschale) jeweils einen Tragkörper umfassen, im Folgenden werden diese Tragkörper entsprechend der Zuordnung zur ersten Lagerschale und zur zweiten Lagerschale als erster Tragkörper und zweiter Tragkörper bezeichnet. In jedem Tragkörper sind Elemente aus Gleitlagerwerkstoff und Permanentmagneten aufgenommen. Die Elemente aus Gleitlagerwerkstoff bilden eine segmentierte Gleitfläche, während die Permanentmagneten so in den Tragkörper eingesetzt sind, dass diese gegenüber der Gleitfläche beabstandet sind. Die Elemente aus Gleitlagerwerkstoff und die Permanentmagneten können jeweils als separate Einzelteile mit dem ersten Tragkörper beziehungsweise dem zweiten Tragkörper verbunden werden. Nach der Erfindung wird jedoch eine Ausgestaltung gewählt für die ein Gleit-Magnetkörper verwendet wird, der ein Element aus Gleitlagerwerkstoff und einen Permanentmagneten umfasst. Demnach bildet ein solcher Gleit-Magnetkörper ein Bauteil, das nach dem Einsetzen einen zur Gleitfläche hinweisenden Teil, der durch das Element aus Gleitlagerwerkstoff gebildet wird, umfasst und wenigstens ein von diesem Element aus Gleitlagerwerkstoff abgedeckten Permanentmagneten aufweist.

Demnach werden als Gleit-Magnetkörper kleine, fertigungstechnisch beherrschbare Komponenten eingesetzt, die in großen Stückzahlen hergestellt werden können. Bevorzugt werden einheitliche Gleit-Magnetkörper verwendet, allerdings sind auch Ausführungsformen der Erfindung denkbar, bei welchen zwei oder mehr unterschiedliche Varianten von Gleit-Magnetkörpern an einem Tragkörper des Lagers befestigt werden, wobei Unterschiede in der Größe, der Materialwahl und der gewählten Geometrie vorliegen können. Ferner ist es möglich, zunächst von baugleichen Gleit-Magnetkörpern auszugehen und lediglich die Magnetisierungsstärke und/oder die Magnetisierungsrichtung des darin aufgenommenen Permanentmagneten anzupassen.

Die Gleit-Magnetkörper sind in Ausnehmungen im Tragkörper eingesetzt und dort kraft-, form- oder stoffschlüssig mit dem Tragkörper verbunden, auch eine Kombination unterschiedlicher Verbindungsarten ist denkbar. Das Einfügen der Gleit-Magnetkörper erfolgt bevorzugt passgenau, insbesondere wird durch Einschleifen eine stufenfreie Gleitfläche hergestellt.

Als Gleitlagerwerkstoff kann ein Metall, wie Bronze, Weißmetall oder eine Legierung mit Blei oder Aluminium, verwendet werden, Alternativen stellen Gleitlagerwerkstoffe auf Kunststoffbasis dar. Besonders bevorzugt wird für die erfindungsgemäßen Elemente aus Gleitlagerwerkstoff eine Keramik, insbesondere eine faserverstärkte Keramik verwendet, da aufgrund der hohen Materialhärte des keramischen Materials auch beim Eintrag abrasiver Medien in das Gleitlager im Wesentlichen die Gleitfläche unverändert intakt bleibt.

Für ein bevorzugtes Ausführungsbeispiel decken die Elemente aus Gleitlagerwerkstoff die Permanentmagneten zur Lauffläche hin ab, wobei im eingesetzten Zustand des Gleit-Magnetkörpers und nach dem bevorzugt ausgeführten Einschleifen der Gleitfläche die dem Lagerspalt zugewandte Fläche des verbauten Gleit-Magnetkörpers Teil der segmentierten Gleitfläche wird. Werden die Gleit-Magnetkörper in Ausnehmungen der Tragkörper eingesetzt, wird im Zwischenbereich zwischen den Elementen aus Gleitlagerwerkstoff die Gleitfläche vom Material der Tragkörper der jeweiligen Lagerschale gebildet.

Werden Keramikelemente als Gleitlagerwerkstoff verwendet, so kann durch die bevorzugte Einbettung der Elemente aus Gleitlagerwerkstoff in die Tragkörper der Lagerschale ein Nachteil des keramischen Materials, nämlich die niedrige Bruchzähigkeit, die zu Sprödbruch führen kann, ausgeglichen werden. Dies gilt insbesondere wenn als Tragkörper ein metallischer Werkstoff, insbesondere ein nicht korrosiver Stahl verwendet wird. Auch andere hinreichend duktile Materialien, wie Kunststoffe, insbesondere faserverstärkte Kunststoffe, können als Tragkörper verwendet werden. Ferner ist es denkbar, die Keramikelemente der Gleit-Magnetkörper als keramische Verbundwerkstoffe herzustellen, das heißt, es werden faserverstärkte Keramiken bevorzugt angewandt, bei denen eingebettete keramische Langfasem verwendet werden, dies können SiC-, Al₂O₃-Fasern oder Mischkristalle aus Al₂O₃ und SiO₂ sein. Zwischen diesen Fasern können keramische Materialien wie SiC oder Silizium-angereichertes SiC oder Al₂O₃ als mögliche Keramikwerkstoffe verwendet werden.

In jedem Gleit-Magnetkörper ist neben dem Element aus Gleitlagerwerkstoff, wie voranstehend dargelegt, wenigstens ein Permanentmagnet aufgenommen. Als Werkstoffe für Permanentmagneten sind seltene Erden geeignet, wie Kobalt-Samarium (Sm₂Co₁₇) und Neodym-Eisen-Bor (Nd₂Fe₁₄B), wobei sich letztere Hochleistungsmagneten durch ein besonders hohes Energieprodukt auszeichnen und Kobalt-Samarium-Permanentmagneten als Hochleistungsmagnete im Falle höherer Temperaturen Verwendung finden. Die Permanentmagneten können je nach Art der Einbringung und Verbindung mit dem Element aus Gleitlagerwerkstoff eine Schutzschicht aufweisen, beispielsweise eine Nickelschutzbeschichtung. Dies ist nicht notwendig, wenn beispielsweise ein Keramikelement den Permanentmagnet vollständig umschließt und kein Flächenteil des Permanentmagnets an der Oberfläche des Gleit-Magnetkörpers freiliegt.

Gemäß einer ersten Ausgestaltungsvariante werden der Permanentmagnet und das Element aus Gleitlagerwerkstoff separat hergestellt und in einem nachfolgenden Herstellungsschritt zur Ausbildung des Gleit-Magnetkörpers beispielsweise mittels einer Klebverbindung vereinigt. Diese Herstellungsvariante hat den Vorteil, dass beide Einzelkomponenten in ihren Herstellungsverfahren nicht aneinander angepasst, sondern jeweils nur passgenau hergestellt werden müssen. Gemäß einer alternativen Ausgestaltung, bei der eine Keramik als Gleitlagerwerkstoff Verwendung findet, wird ein ungesinterter, das heißt lediglich isostatisch in einem Magnetfeld gepresster Permanentmagnet in einen Keramikgrünling eingesetzt, wobei der nachfolgende Sinterschritt gemeinsam ausgeführt wird. Dies führt zu einer vorteilhaften gesinterter Stoffverbindung zwischen Permanentmagnet und Keramikelement. Ferner ist bei diesem Herstellungsverfahren eine vollständige Aufnahme des Permanentmagneten in das Keramikelement in vereinfachter Weise möglich, sodass der Permanentmagnet vom inerten Keramikmaterial allseitig umhüllt wird. Allerdings ist es für eine solche Verfahrensgestaltung notwendig, die Sintertemperaturen anzupassen. Im Regelfall wird dies zu einer Absenkung der Sintertemperatur für die Keramik auf etwa 1000 bis 1200° C führen, was jedoch im Fall einer fasergebundenen Keramik vorteilhaft ist.

Gemäß einer weiteren Ausgestaltung der Herstellung des Gleit-Magnetkörpers wird in einem ersten Verfahrensschritt das Element aus Gleitlagerwerkstoff hergestellt. Sodann erfolgt ein Anformen eines polymergebundenen Permanentmagneten, wobei das zunächst plastische Material des Permanentmagneten beispielsweise mittels eines Spritzgussverfahrens in eine Ausnehmung des Elements aus Gleitlagerwerkstoff eingepresst oder an einer seiner Seitenflächen angebracht wird. Ferner sind Ausgestaltungen denkbar, für die zunächst der Permanentmagnet hergestellt wird und dieser zur Komplettierung des Gleit-Magnetkörpers wenigstens teilweise von einem Element aus Gleitlagerwerkstoff umhüllt wird, das unmittelbar auf dem Permanentmagneten selbst aufgebracht wird. Im Falle eines Keramikelements kann beispielsweise ein Fasergebilde am Permanentmagnet befestigt werden, wobei die Zwischenräume im Fasergebilde durch ein keramisches Material, beispielsweise mittels eines CVI-Verfahrens (Chemical Vapor Infiltration), aufgefüllt werden. So kann beispielsweise Siliziumcarbid aus der Gasphase abgeschieden werden, wobei aus einem Gemisch aus Wasserstoff, der als Katalysator dient, und Methyl-TrichlorSilan auf einer auf ca. 800°C aufgeheizten Matrix Siliziumcarbid gebildet und in die Fasermatrix eingelagert wird.

Durch die Verwendung von Elementen aus Gleitlagerwerkstoff und Permanentmagneten, ist es möglich, eine Vielzahl identischer Elemente als Baueinheiten vorzufertigen und an dafür vorgesehenen Stellen des Tragkörpers anzubringen. Dieses Einsetzen erfolgt so, dass die Magnetisierungsrichtung der Permanentmagneten im Wesentlichen senkrecht zur Gleitfläche ausgerichtet ist. Hierbei ist es denkbar, die Magnetisierungsrichtungen auf der ersten Lagerschale und der zweiten Lagerschale so einzustellen, dass entweder eine attraktive oder eine repulsive Wechselwirkung der Lagerschalen erzielt wird. Ferner ist es möglich, die Permanentmagneten so zur Gleitfläche auszubilden, dass ein gewisser Verkippungswinkel der Magnetisierungsrichtung zur Flächennormalen vorliegt, bevorzugt wird im Allgemeinen ein möglichst kleiner Winkel von kleiner als 10°. Allerdings ist es denkbar, wenigstens einen Teil der Gleit-Magnetkörper derart am Tragkörper zu befestigen, dass die Magnetisierungsrichtung der entsprechenden Permanentmagneten gezielt eine Teilkraftkomponente erzeugt, die transversal zur Flächennormale der Gleitfläche gerichtet ist. Dies kann insbesondere für Gleit-Magnetkörper der Fall sein, die am Rand einer Lagerschale, beispielsweise eines Radiallagers, angeordnet sind, sodass diese neben der Abstützung der Hauptlagerrichtung zusätzlich zur Zentrierung der Lagerschale dienen. Im Fall eines Radiallagers können beispielsweise die an Randbereichen der Lagerschale angebrachten Gleit-Magnetkörper so magnetisiert sein, dass eine Zentrierung der Lagerkomponenten erfolgt, das heißt zusätzlich eine Abstützung von Lagerkräften in Axialrichtung bewirkt wird.

Für eine Ausgestaltungsaltemative ist die Magnetisierungsrichtung der Permanentmagneten nach deren Einbau beziehungsweise dem Einbau der diese umfassenden Gleit-Magnetkörper in die Tragkörper im Wesentlichen tangential zur Gleitfläche ausgerichtet, wobei eine alternierende Anordnung in Umfangsrichtung bevorzugt wird. Ferner kann für die Vereinigung des Elements aus Gleitlagerwerkstoff und des Permanentmagneten zu einem Gleit-Magnetkörper dieser so aufgebaut sein, dass er zusätzliche Komponenten umfasst. Diese können lastabtragende Strukturkomponenten oder Füllmaterialien für den korrosionssicheren Einschluss des Permanentmagneten sein. Darüber hinaus können Materialien zur Flussführung vorgesehen sein, um PermanentmagnetMaterial zu sparen, ohne die magnetischen Kräfte im Lagerspalt wesentlich abzuschwächen. Zur weichmagnetischen Flussführung werden insbesondere ferromagnetische Materialien wie Eisen, Nickel und Kobalt verwendet.

Die erfindungsgemäß magnetisch aufgebrachten Lagerkräfte führen zu einer Stabilisierung des Lagers und zur Aufrechterhaltung eines mittleren Spaltabstands beim Betrieb, sodass sich darin ein Flüssigkeitsfilm des Schmiermittels stabil ausbilden kann und die dämpfenden, statischen und hydrodynamischen Effekte des Schmiermittels zum Tragen kommen, wobei durch diese Maßnahme bereits bei geringen Umlaufgeschwindigkeiten der Bereich der Flüssigkeitsreibung erreicht wird. Ferner ist die Anordnung der Gleit-Magnetkörper in Abhängigkeit der Belastung einstellbar, wobei bei einer mittleren, asymmetrischen Belastung die Verteilung der Permanentmagnete und damit die Stärke der in das Lager eingebrachten Magnetkraft ortsangepasst werden kann. Denkbar ist auch eine örtlich angepasste Verteilung repulsiver und attraktiver Magnetpaare auf der ersten und der zweiten Lagerschale. Ferner ist es möglich, durch die gewählte Verteilung der Permanentmagnete in den der ersten und der zweiten Lagerschale zugeordneten Tragkörpern die aufgebrachte Magnetkraft zu homogenisieren.

Das erfindungsgemäße Hybridlager kann für unterschiedliche Lageranordnungen verwendet werden, beispielsweise als Radiallager, insbesondere zur Lagerung der Nabe einer tauchenden Energieerzeugungsanlage. Darüber hinaus kann ein erfindungsgemäß gestaltetes Hybridlager axiale Kräfte an einer solchen Anlage abstützen, wobei je nach Anwendungsfall, das heißt der vorgesehenen Anströmungsrichtung, ein einseitiges oder beidseitiges Axiallager ausgebildet wird. Ferner ist es denkbar, sowohl axiale wie auch radiale Kräfte durch die Verwendung eines erfindungsgemäßen Hybridlagers in Schräglageranordnung abzufangen.

Gemäß weiterer, vorteilhafter Ausgestaltungen kann dem Hybridlager eine Pumpeneinheit zum Einpressen von Schmiermittel in den Lagerspalt zugeordnet sein, welche den Übergang der Reibungscharakteristik von Festkörperreibung bzw. Mischreibung zur Flüssigkeitsreibung zusätzlich begünstigt. Zur weiteren Stabilisierung des Hybridlagers ist es denkbar, Dämpfungselemente vorzusehen, die beispielsweise aus einem gummielastischen Material hergestellt sein können. Diese stehen bevorzugt mit einer der beiden Lagerschalen in Verbindung und ragen in den Lagerspalt hinein, das heißt der den Dämpfungselementen zugeordnete Lagerspalt ist geringer als der mittlere Lagerspalt zwischen den Gleitflächen auf der ersten und der zweiten Lagerschale, sodass diese Dämpfungselemente bei Lagerschwingungen punktuell an der gegenüberliegenden Lagerschale anliegen und eine elastische Gegenkraft sowie eine Energiedissipation bewirken. Alternativ können derartige Dämpfungselemente parallel zum eigentlichen Magnet-Gleitlager angeordnet sein, um die gewünschte Schwingungsunterdrückung zu erzielen. Ferner ist es denkbar, die Lagerstabilisierung mittels zusätzlicher Dämpfungselemente nur für bestimmte Freiheitsgrade der Lagerbewegung zu verwenden.

Nachfolgend wird die Erfindung anhand von Ausführungsbeispielen in Verbindung mit Figurendarstellungen genauer beschrieben, die im Einzelnen Folgendes darstellen:
- Figur 1: zeigt schematisch vereinfacht eine Querschnittansicht eines erfindungsgemäßen Hybridlagers.
- Figur 2: zeigt in einer Skizze die Abhängigkeit der Lagerkräfte von der Umlaufgeschwindigkeit einer an der Lagerung abgestützten Wasserturbine.
- Figur 3: zeigt eine Draufsicht auf einen Tragkörper einer erfindungsgemäßen Lagerschale.
- Figuren 4a und 4b: zeigen in einer Draufsicht schematisch vereinfacht eine Ausgestaltung für eine Verteilung der Gleit-Magnetkörper auf den Tragkörpern eines erfindungsgemäßen Hybridlagers.
- Figur 5: zeigt eine formschlüssige Befestigung eines Gleit-Magnetkörpers am Tragkörper des Hybridlagers.
- Figur 6: zeigt eine weitere Ausgestaltung des erfindungsgemäßen Hybridlagers mit auf dem Tragkörper aufgesetzten Gleit- Magnetkörpern.
- Figur 7: zeigt in einer Schnittansicht in Ausnehmungen des Tragkörpers eingesetzte Gleit-Magnetkörper vor dem abschließenden Bearbeitungsschritt, bei dem die endgültige Kontur der Gleitfläche hergestellt wird.
- Figur 8: zeigt eine Ausgestaltungsvariante mit separaten Elementen aus Gleitlagerwerkstoff und Permanentmagneten.
- Figur 9: zeigt eine Verwendung eines erfindungsgemäßen Hybridlagers in Schräglageranordnung zur Abstützung radialer und axialer Kräfte einer Turbineneinheit für eine tauchende Energieerzeugungsanlage.
- Figur 10: zeigt eine weitere Ausgestaltung einer tauchenden Energieerzeugungsanlage mit einem erfindungsgemäßen Axiallager.
- Figur 11: zeigt ein Axiallager angeordnet im Umfangsbereich der Nabe einer tauchenden Energieerzeugungsanlage.
- Figur 12: zeigt eine weitere Gestaltung eines erfindungsgemäßen Axiallagers für die Abstützung bidirektionaler Axialkräfte.

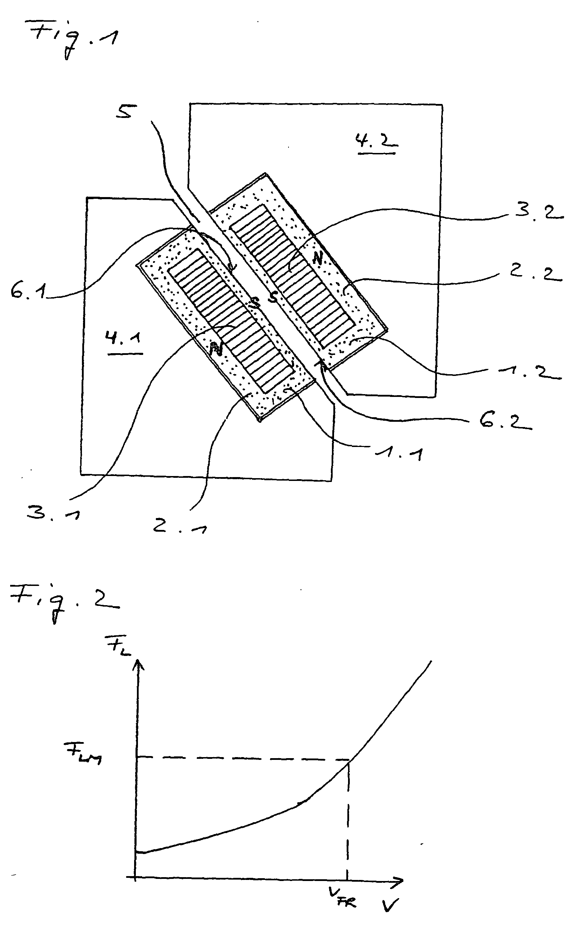

Figur 1 zeigt in einer schematisch vereinfachten Schnittansicht Teile einer ersten Lagerschale und einer zweiten Lagerschale eines erfindungsgemäßen Hybridlagers, wobei jede der Lagerschalen einen Tragkörper 4.1 und 4.2 umfasst. Diese sind durch einen Lagerspalt 5 getrennt. Eingesetzt in die Tragkörper 4.1, 4.2 sind Gleit-Magnetkörper 1.1, 1.2, die jeweils aus einem Element aus Gleitlagerwerkstoff 2.1, 2.2 und einem eingelagerten Permanentmagnet 3.1, 3.2 bestehen. Für die in Figur 1 dargestellte Ausgestaltung verlaufen die Magnetisierungsrichtungen der Permanentmagneten 3.1, 3.2 im Wesentlichen senkrecht zu den Gleitflächen 6.1, 6.2 des Hybridlagers, wobei in der dargestellten Ausführung die beiden gezeigten Permanentmagneten einander abstoßen und so die beiden Lagerhälften voneinander abheben.

In Figur 2 ist schematisch vereinfacht der Verlauf der Lagerkräfte für eine mit der Geschwindigkeit V umlaufende Lagereinheit dargestellt. Dies kann beispielsweise das Nabenteil einer Wasserturbine für eine tauchende Energieerzeugungsanlage sein. Eine Zunahme der Umlaufgeschwindigkeit bei einer für den drehzahlvariablen Betrieb ausgebildeten Wasserturbine ist verknüpft mit einer höheren Geschwindigkeit der Umgebungsströmung, sodass entsprechend die Lagerkräfte ansteigen. Ab einer gewissen Geschwindigkeit V_{FR} wird das mit der Umwälzbewegung mitgerissene Schmiermittel einen ertragfähigen Film hydrodynamisch ausbilden, sodass die Mischreibungsphase verlassen wird und im Wesentlichen Flüssigkeitsreibung verbunden mit einer deutlichen Reduktion des Reibungskoeffizienten im Gleitlager vorliegen wird. Erfindungsgemäß wird durch die im Hybridlager vorgesehenen Permanentmagnete kontaktlos eine zusätzliche magnetische Lagerkraft erzeugt. Bevorzugt wird diese mittlere magnetische Lagerkraft F_{LM} so eingestellt, dass bei Geschwindigkeiten unterhalb des Übergangs zur Flüssigkeitsreibung, das heißt Geschwindigkeiten kleiner als V_{FR}, die magnetischen Kräfte das Gleitlager wesentlich entlasten. Als Folge wird sich auch bei geringeren Geschwindigkeiten unterhalb V_{FR} der Reibungskoeffizient verringern beziehungsweise der Übergang zur Flüssigkeitsreibung wird bereits bei geringen Relativgeschwindigkeiten der beiden Lagerhälften erreicht.

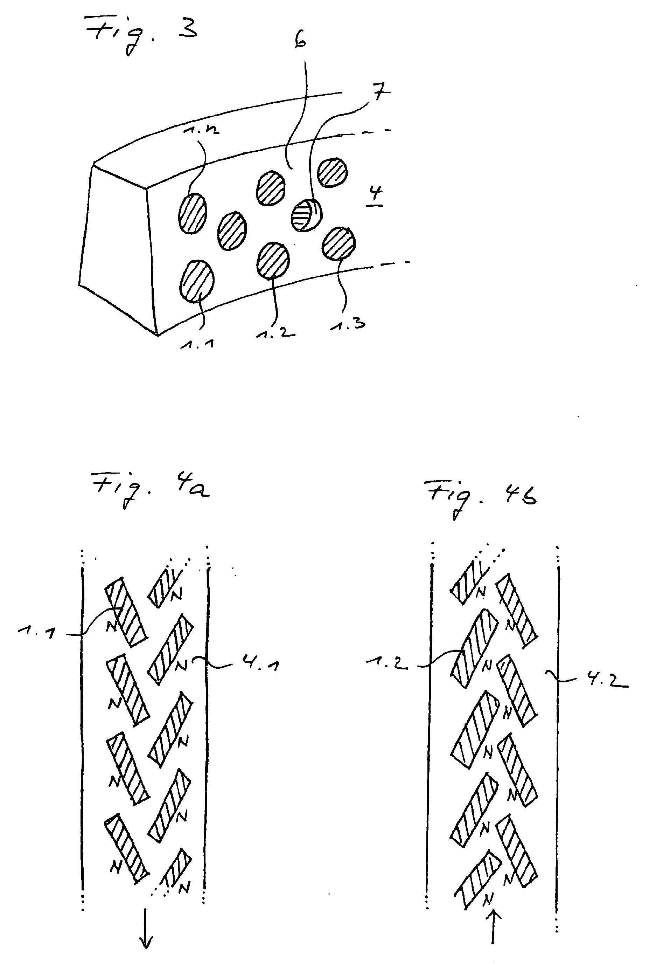

Figur 3 zeigt einen Tragkörper 4 einer Lagerschale mit darin aufgenommenen Gleit-Magnetkörpern 1.1, 1.2, 1.3, ..., 1.n. Diese sind in Ausnehmungen 7 des Tragkörpers 4 eingesetzt und weisen im dargestellten Ausgestaltungsbeispiel eine kreisrunde Form auf. Für ein großbauendes Lager, beispielsweise ein Radiallager für die Nabe einer direkt angetriebenen, tauchenden Energieerzeugungsanlage liegt ein typischer Lagerdurchmesser bei ca. 2 m. Die Gleit-Magnetkörper 1.1, ..., 1.n können beispielsweise für das dargestellte Ausführungsbeispiel einen Durchmesser von 50 mm aufweisen. Die in die Gleit-Magnetkörper eingelagerten Permanentmagneten werden von einer tragfähigen Schicht mit einem Gleitlagerwerkstoff zur Gleitfläche 6 hin überdeckt und erzeugen im vorliegenden Ausführungsbeispiel ein Magnetfeld mit einer magnetischen Induktion von B ≈ 1 - 1.3 T. Diese wird zum einen von dem Lagerspalt zugewandten Flächen der Elemente aus Gleitlagerwerkstoff der Gleit-Magnetkörper 1.1, ..., 1.n gebildet. Zwischen diesen Gleitlagerwerkstoffflächen wird bevorzugt das Material des Tragkörpers 4 Teil der Gleitfläche 6, wobei die Einbettung der Gleit-Magnetkörper 1.1, ..., 1.n in den Tragkörper gemäß einer vorteilhaften Ausgestaltung bündig und stufenlos erfolgt. Die Stufenfreiheit wird vorteilhafterweise durch einen abschließenden Schleifschritt, bei dem die Kontur der Gleitfläche hergestellt wird, erzielt.

Die Figuren 4a und 4b zeigen eine fischgrätartige Anordnung rechteckförmiger Gleit-Magnetkörper 1.1 und 1.2 auf zwei Tragkörpern 4.1, 4.2, die im zusammengesetzten Zustand am Lagerspalt gegenüberliegen. Durch die gegeneinander verschränkte Anordnung wird der Kraftverlauf der magnetischen Kräfte im Hybridlager homogenisiert. Zu diesem Zweck ist es ferner möglich, Gleit-Magnetkörper unterschiedlicher Größe oder unregelmäßig angeordnet an den Tragkörpern zu befestigen.

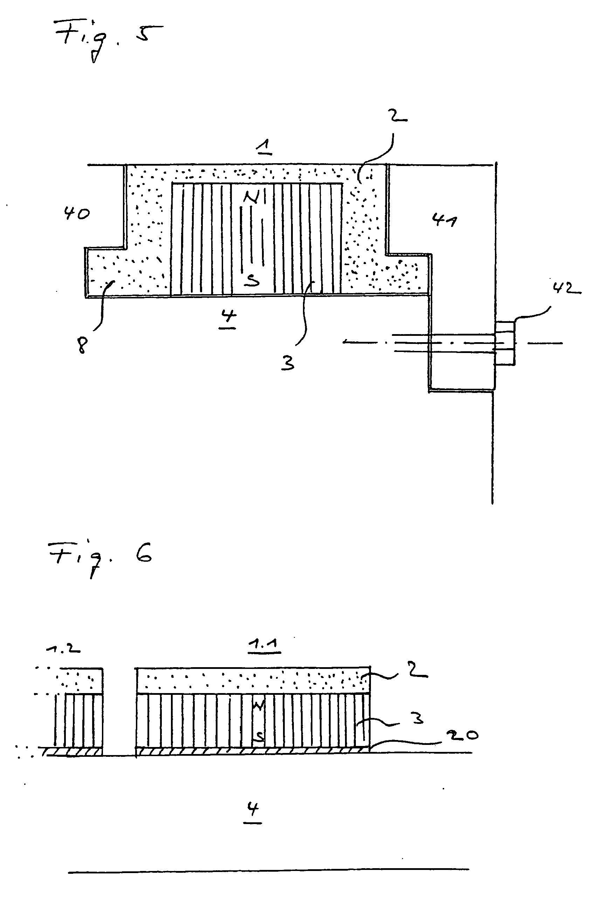

Figur 5 zeigt eine Befestigungsvariante für einen Gleit-Magnetkörper 1 im Tragkörper 4. Hierbei ist das den Permanentmagneten 3 umkleidende Element aus Gleitlagerwerkstoff 2 mit einem Flansch versehen, der in eine Ausnehmung einer ersten Teilkomponente des Tragkörpers 40 eingreift. Eine zweite Teilkomponente des Tragkörpers 41 umgreift das freie Ende dieses Flansch 8, wobei mittels eines Befestigungsmittels, typischerweise einer Schraube, der Gleit-Magnetkörper 1 formschlüssig am Tragkörper 4 befestigt wird. Zusätzlich kann dieser Formschluss durch ein stoffschlüssiges Verbindungsverfahren verbessert werden, hierbei kommt ein zusätzliches Einkleben des Gleit-Magnetkörpers 1 in den Tragkörper 4 in Betracht. Alternativ oder zusätzlich kann der Gleit-Magnetkörper 1 reibschlüssig in einer Ausnehmung des Tragkörpers 4 befestigt werden. Auch eine ausschließlich stoffschlüssig hergestellte Verbindung ist möglich.

Figur 6 zeigt eine Ausgestaltungsvariante, bei der die Gleit-Magnetkörper 1.1, 1.2 nicht in Ausnehmungen des Tragkörpers 4 eingesetzt sind, sondern auf diesen aufgesetzt werden. Dies ist fertigungstechnisch vorteilhaft gegenüber den bisher dargestellten Varianten, allerdings fehlt ein seitlicher Halt für die jeweiligen Gleit-Magnetkörper. Vorteilhafterweise kann das Aufsetzen des Gleit-Magnetkörpers 6 auf den Tragkörper 4 mit einer Weitergestaltung verbunden sein, bei der der Gleit-Magnetkörper 1.1, 1.2 in gewissem Umfang eine Kippbewegung gegen den Tragkörper 4 ausführen kann. Gemäß einer möglichen Variante ist hierfür zwischen dem Gleit-Magnetkörper 1 und dem Tragkörper 4 ein elastisches Element 20 vorgesehen, das dem Gleit-Magnetkörper 1 ein gewisses Maß an Bewegungsmöglichkeit gegenüber dem Tragkörper belässt und gleichzeitig gegenüber einer Auslenkung aus der Ruhelage eine elastische Gegenkraft erzeugt, sodass der Gleit-Magnetkörper 1 beim Abgleiten auf der gegenüberliegenden Fläche deren Kontur möglichst präzise folgen kann.

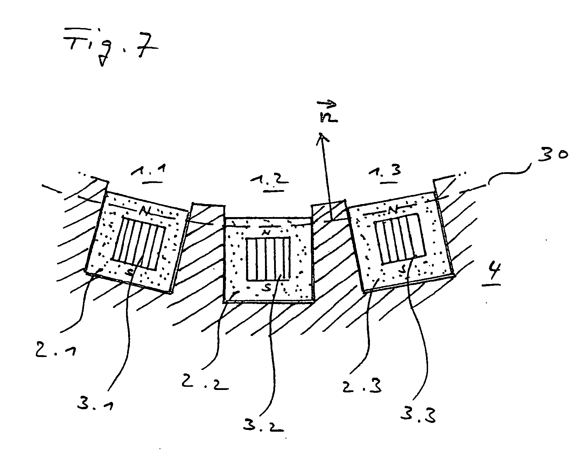

Gemäß einer bevorzugten Ausführungsform der Erfindung wird als Element aus Gleitlagerwerkstoff ein keramisches Element verwendet. Dies eröffnet die Möglichkeit, das endgültige Sintern des Permanentmagneten mit dem Sintern des Keramikelements zu verbinden. Hierzu wird ein isostatisch gepresster Permanentmagnet mit einem Keramikgrünling verbunden. Hierbei ist es möglich, den Permanentmagneten entsprechend der Darstellung von Figur 7 - siehe die Bezugszeichen 3.1, 3.2 und 3.3 - in die ungesinterten Keramikelemente, die die Elemente aus Gleitlagerwerkstoff 2.1, 2.2 und 2.3 bilden, einzulagern. Im nachfolgenden Sinterschritt ergibt sich eine stoffschlüssige Sinterverbindung zwischen dem Permanentmagnet und dem Keramikelement. Vor dem Einsetzen der so erzeugten Gleit-Magnetkörper 1 können diese nachbearbeitet und einem endgültigen Magnetisierungsschritt unterzogen werden, wobei über die Aufmagnetisierungsstärke die magnetischen Tragkräfte im Hybridlager eingestellt werden können. Gemäß Figur 7 wird eine solche Magnetisierungsrichtung der Permanentmagnete 3.1, 3.2 und 3.3 der Gleit-Magnetkörper 1.1, 1.2 und 1.3 gewählt und diese so in den Tragkörper 4 eingesetzt, dass die Magnetisierungsrichtung im Wesentlichen der Normalenrichtung n der späteren Gleitfläche entspricht. Entsprechend zur Figur 7 wird nach dem Montageschritt, bei dem die Gleit-Magnetkörper 1.1, 1.2 und 1.3 in dafür vorgesehene Ausnehmungen im Tragkörper eingesetzt werden, die Gleitfläche 6 eingeschliffen. Hierzu ist gestrichelt die Kontur der Gleitfläche 30 dargestellt, sodass zur Ausbildung der Gleitfläche sowohl Teile des Gleitlagerwerkstoffs der Gleit-Magnetkörper wie auch Material am Tragkörper 4 durch den Endbearbeitungsschritt abzutragen sind. Hierbei kommt eine Bearbeitung mit Diamantwerkzeugen in Frage, ebenso durch ein kombiniertes Fräs-, Schleif- und Polierverfahren. Gemäß einer Ausgestaltungsvariante ist es denkbar, in die Gleitfläche eine Riffelung einzuschleifen, die die Ausbildung eines tragfähigen Schmiermittelfilms fördert. Dies können auch Keil- und/oder Rastflächen sein, auch Schmiermittelnuten können in die Gleitflächen eingelassen sein.

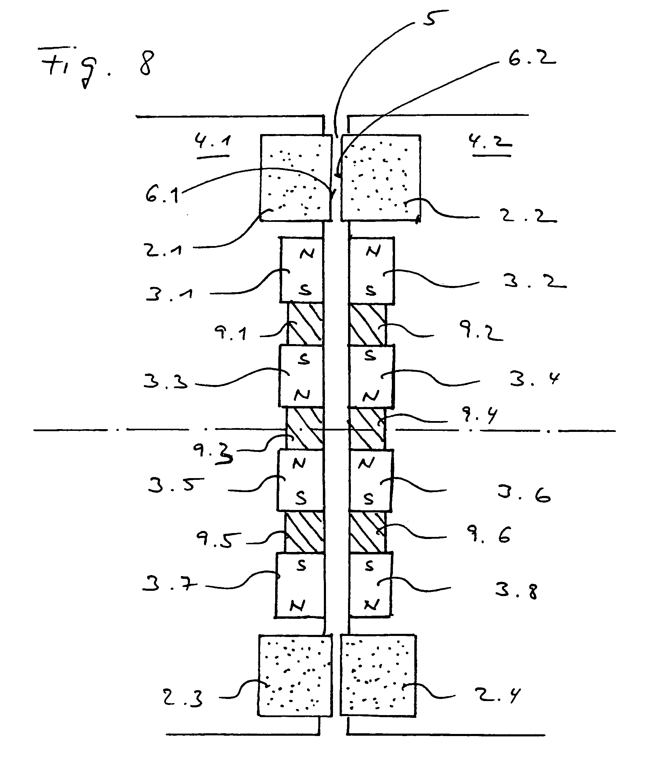

Figur 8 zeigt eine alternative Ausgestaltung für die die Elemente aus Gleitlagerwerkstoff und die Permanentmagneten nicht zu Gleit-Magnetkörper bildenden Baueinheiten vereinigt sind. Dargestellt ist dies anhand eines Axiallagers in schematisch vereinfachter Darstellung. In den ersten Tragkörper 4.1 und den zweiten Tragkörper 4.2 sind am Lagerspalt 5 jeweils einzelne Elemente aus Gleitlagerwerkstoff 2.1, 2.2 einander gegenüberliegend angeordnet. Diese springen gegenüber den Flächen der Tragkörper am Lagerspalt 5 etwas vor, sodass sie die erste Gleitfläche 6.1 und die zweite Gleitfläche 6.2 bilden. Die Elemente aus Gleitlagerwerkstoff 2.1, 2.2 sind in Vertiefungen im ersten Tragkörper 4.1 und im zweiten Tragkörper 4.2 eingesetzt, der diese durch seitlichen Halt schützt und zugleich die beim Abgleiten eingetragenen Kräfte sicher ableitet. In einer zweiten Gruppe von Ausnehmungen in den Tragkörpern 4.1, 4.2 sind jeweils am Lagerspalt 5 aneinander gegenüberliegende Permanentmagneten 3.1, 3.2, 3.3 und 3.4 angeordnet. Für die dargestellte Ausgestaltung läuft die Magnetisierungsrichtung im Wesentlichen rechtwinklig zur Flächennormalen der Gleitflächen 6.1, 6.2. Ferner ist die Magnetisierung einander benachbarter Permanentmagneten 3.1 - 3.n auf jedem der Tragkörper jeweils entgegengesetzt zueinander gerichtet. Ferner wird für die dargestellte Ausgestaltung ein weichmagnetischer Werkstoff zwischen Permanentmagneten mit entgegengesetzter Magnetisierungsrichtung angeordnet. Durch diese Maßnahme wird das Magnetfeld in Richtung der Flächennormalen der jeweiligen Gleitfläche 6.1, 6.2 geleitet, sodass durch die magnetischen Kräfte zwischen den beiden Lagerschalen die gewünschte Entlastung des Gleitlagers erzielt wird. Ein weichmagnetisches Material kann auch für die Gleit-Magnetkörper aus den vorhergehenden Ausführungsbeispielen vorgesehen sein. Darüber hinaus ist auch für diese kombinierten Bauelemente eine Orientierung der Magnetisierungsrichtung der Permanentmagneten entsprechend zu der in Figur 8 gezeigten Ausgestaltung möglich. Ferner ist es denkbar, bei einer Parallelorientierung der Magnetisierungsrichtung zur Gleitfläche eine Abfolge jeweils entgegengesetzter magnetischer Pole an den Stirnflächen der Permanentmagneten vorzusehen. Eine solche Ausgestaltung ist im Einzelnen nicht in den Figuren dargestellt.

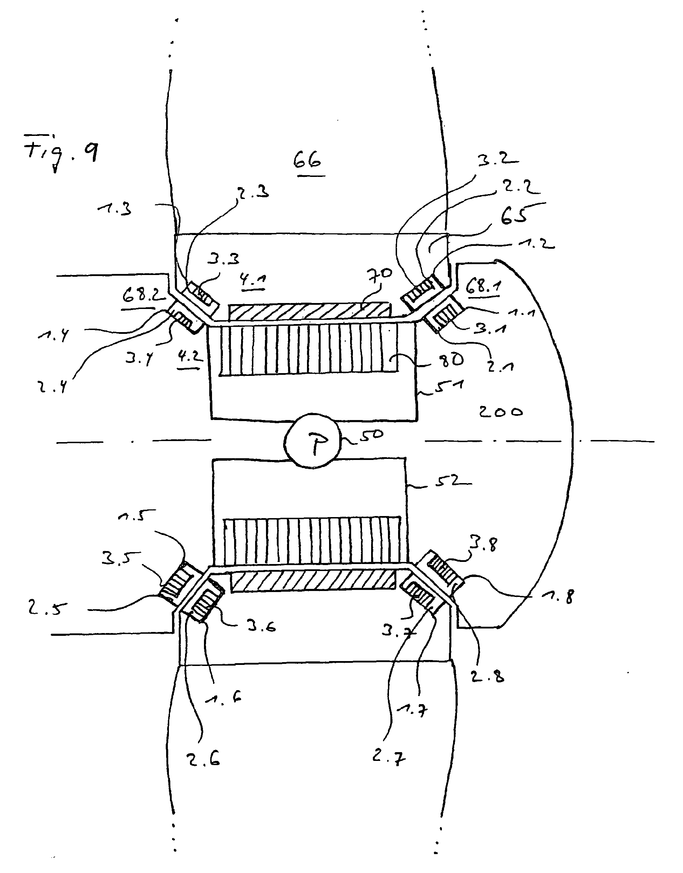

Die Figuren 9, 10 und 11 zeigen mögliche Anwendungen und Ausgestaltungsvarianten für ein erfindungsgemäßes Hybridlager zur Lagerung umlaufender Einheiten einer tauchenden Energieerzeugungsanlage. Figur 9 zeigt in einem schematisch vereinfachten Axialschnitt Teile eines Gondelgehäuses 200, wobei im Bereich dessen Außenumfangs eine Nabe 65 als umlaufendes Element gelagert ist, die eine Baueinheit mit einer typischerweise propellerförmig ausgestalteten Wasserturbine 66 (nur teilweise dargestellt) bildet. Als Teil des elektrischen Generators ist in der Nabe 65 ein Generatorläufer 70 angeordnet, dieser kann mittels Permanentmagneten oder einer Erregerwicklung realisiert sein. Im ortsfesten Teil, typischerweise innerhalb des Gondelgehäuses 200, ist der Generatorstator 80 untergebracht. Für diese Ausgestaltung einer direkt angetriebenen tauchenden Energieerzeugungsanlage ist der Luftspalt zwischen Generatorläufer 70 und Generatorstator 80 möglichst präzise zu führen. Demnach sind die durch die Wasserturbine 66 auf die Nabe 65 eingeleiteten Kräfte und zusätzlich die magnetischen Kräfte im elektrischen Generator durch eine Lagerung der Nabe 65 abzufangen, die im dargestellten Ausgestaltungsbeispiel als Schräglager 68.1, 68.2 ausgebildet sind und demnach radiale und axiale Kraftkomponenten aufweisen. Entsprechend der skizzenhaften Darstellung in Figur 9 sind die Schräglager 68.1, 68.2 als erfindungsgemäße Hybridlager aufgebaut. Hierbei sind Gleit-Magnetkörper 1.1 -1.8 in die Tragkörper 4.1, 4.2 der Lagerhälften eingebracht, wobei letztere wiederum Teilkomponenten der Nabe 65 und des Gondelgehäuses 200 sind. In die einzelnen Gleit-Magnetkörper 1.1 - 1.8 sind jeweils Permanentmagneten 3.1 - 3.8 eingelassen, die von Elementen aus Gleitlagerwerkstoffen 2.1 - 2.8 umhüllt werden, die wiederum Teile der Gleitflächen der Hybridlager bilden. Ferner ist in Figur 9 eine Schmiermittelpumpe 50 in Verbindung mit Schmiermittelleitungen 51, 52 dargestellt, die Schmiermittel in die Schräglager 68.1, 68.2 einpresst.

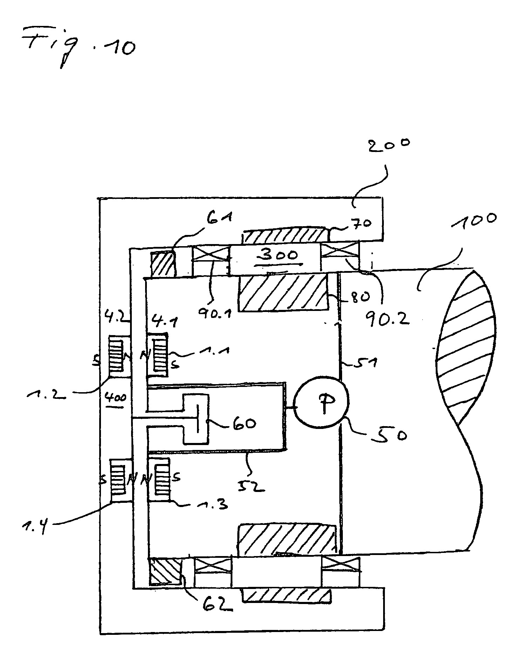

Figur 10 stellt eine weitere Ausgestaltung der Lagerkomponenten für eine tauchende Energieerzeugungsanlage dar. Im Gegensatz zum voranstehend beschriebenen Ausführungsbeispiel liegt eine im Innern eines Gondelgehäuses 200 umlaufende Wasserturbinenwelle 100 vor, die wenigstens mittelbar von einer im Einzelnen nicht dargestellten Wasserturbine angetrieben wird. Als Radiallager werden für die dargestellte Ausgestaltung einfache Wälzlager 90.1, 90.2 verwendet. Gemäß einer nicht dargestellten, bevorzugten Ausführung können anstatt der Wälzlager Gleitlager verwendet werden. Dies können keramische Gleitlager sein, die nicht notwendigerweise als Hybridlager ausgebildet sind. Für die axiale Richtung, in die höhere Lagerkräfte eingebracht werden, werden die erfindungsgemäßen Hybridlager eingesetzt. Entsprechend sind in die scheibenförmigen Ablaufflächen Gleit-Magnetkörper 1.1 - 1.4 als Kombination eines Elements aus einem Gleitlagerwerkstoff und einem Permanentmagneten eingesetzt. Die Kombination eines klassischen Gleitlagers für die Radialrichtung und eines erfindungsgemäßen Hybridlagers in Axialrichtung ist deshalb vorteilhaft, da die wesentlichen axialen Lagerkräfte wenigstens zum Teil magnetisch abgestützt werden und das radiale Gleitlager zur Stabilisierung des Hybridlagers beiträgt. Gemäß einer Ausgestaltung ist es jedoch denkbar, auch in das radiale Gleitlager die erfindungsgemäßen Gleit-Magnetkörper mit integriertem Permanentmagnet so aufzunehmen, dass das Radiallager asymmetrisch entlastet wird, das heißt das Eigengewicht der gelagerten, umlaufenden Einheiten wird magnetisch wenigstens teilweise aufgefangen, sodass insbesondere das Anlaufen der Anlage verbessert wird.

Ferner ist ein Dämpfungselement 60 vorgesehen, das in Form eines Zylinders mit einem in ein Dämpfungsmedium eintauchenden Stempel realisiert sein kann. Als Dämpfungsmedium wird bei einer tauchenden Energieerzeugungsanlage Wasser verwendet. Für die in Figur 10 gezeigte Ausführung liegt eine Parallelanordnung des Dämpfers zum eigentlichen Axiallager 400 vor, die dazu dient, Lagerschwingungen abzuschwächen. Zusätzlich kann im Dämpfer eine Anschlagsfunktion integriert sein. Ferner werden gummielastische Körper 61 und 62 verwendet, welche die Radialbewegung einschränken beziehungsweise abdämpfen und so zusätzlich zu den Wälzlagern 90.1, 90.2 die Radialbewegung im Axiallager führen und somit das erfindungsgemäße axiale Hybridlager zusätzlich stabilisieren.

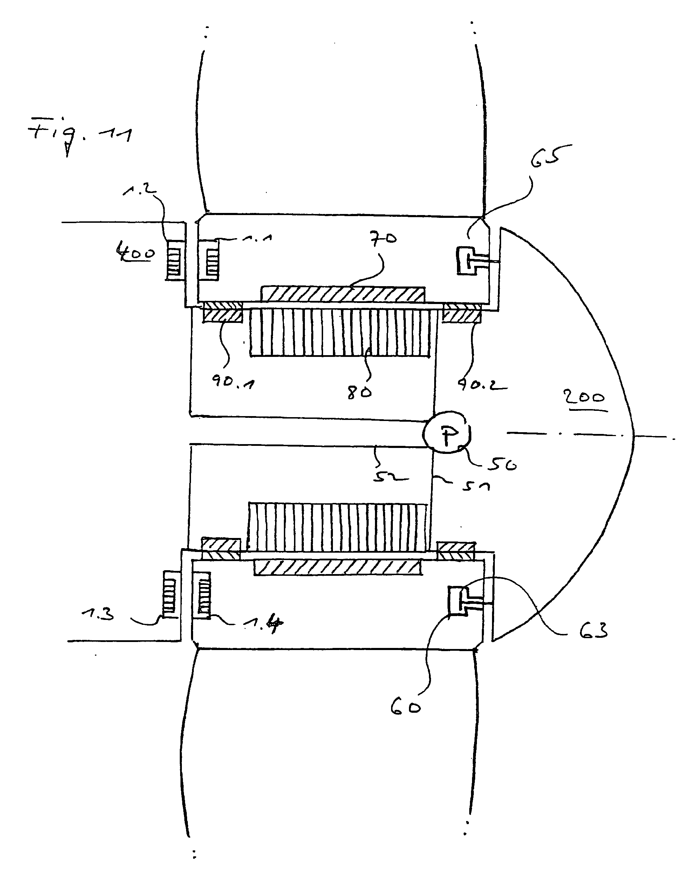

In Figur 11 ist eine weitere Ausgestaltung einer tauchenden Energieerzeugungsanlage mit einem erfindungsgemäßen Hybridlager dargestellt, wobei dieses wiederum entsprechend zu Figur 10 als Axiallager 400 ausgebildet ist. Gezeigt sind in der Schnittdarstellung die Gleit-Magnetkörper 1.1 -1.4. Die Besonderheit dieser Ausführungsform ist in der Anordnung des Axiallagers 400 im Bereich des Außenumfangs des Gondelgehäuses 200 zu sehen. Hierdurch entsteht ein großbauendes Lager, das die ins Lager eingeleiteten Kräfte besonders effizient auffängt. Als Dämpfungselement 60 ist in der Nabe 65 gegenüberliegend zum Axiallager 400 eine ringförmige Kammer ausgebildet, die beispielsweise mit Schmiermittel oder Wasser gefüllt ist, in die ein mit dem Gondelgehäuse 200 verbundener Stempelkörper 63 eintaucht. Hierdurch werden insbesondere Schwingungen der Nabe 65 in Axialrichtung abgedämpft.

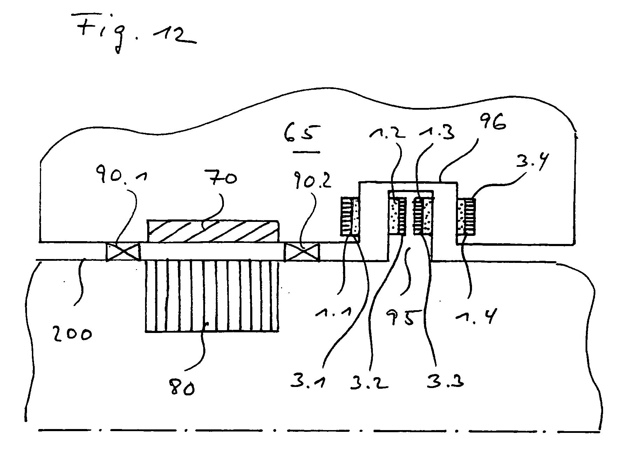

Für zweiseitig angeströmte, tauchende Energieerzeugungsanlagen sind die erfindungsgemäßen axialen Hybridlager symmetrisch, das heißt beidseitig an der Nabe 65 angeordnet. Eine weitere Ausgestaltung für ein Axiallager zur Abstützung bidirektionaler Axialkräfte ist in Figur 12 schematisch vereinfacht dargestellt. Eine Nabe 65 mit einem Generatorläufer 70 ist auf einem Gondelgehäuse 200, in dem der Generatorstator 80 untergebracht ist, mittels der Wälzlager 90.1, 90.2 radial gelagert. Dieses Radiallager kann auch als Gleitlager gestaltet sein oder durch ein erfindungsgemäßes Hybridlager verwirklicht werden. Zur Abstützung der Axialkräfte ist eine Lageranordnung auf einem Bund 95 am Gondelgehäuse 200 vorgesehen, die in eine als Gegenstück ausgebildete Ringnut 96 in der Nabe 65 eingreift. An den axialen Wandungsflächen des Bundes 95 und der Ausnehmung 96 sind Gleit-Magnetkörper 1.1, 1.2, 1.3 und 1.4 vorgesehen, wobei die Permanentmagnete 3.1, 3.2, 3.3 und 3.4 dieser Gleit-Magnetkörper eine repulsive Kraft im Lagerspalt 5 zu beiden Seiten des Bunds 95 bewirken. Hierdurch wirkt die Anordnung dämpfend, wobei bevorzugt das erfindungsgemäße Hybridlager nicht vorgespannt wird, um die magnetischen Stützkräfte nicht zu reduzieren. Daher wird, wie in Figur 12 skizziert, ein hinreichender Lagerspalt 5 geschaffen, wobei die magnetischen Kräfte, die durch die Gleit-Magnetkörper 1.1 - 1.4 bewirkt werden, den Bund 95 gegen eine äußere Kraftwirkung in der Ringnut 96 zentriert.

Ein erfindungsgemäß aufgebautes Hybridlager beziehungsweise das erfindungsgemäße Verfahren für dessen Herstellung kann neben tauchender Energieerzeugungsanlagen vorteilhaft auf weitere Maschinen mit ähnlichem Anforderungsprofil bezüglich der Lagerung übertragen werden. Dies betrifft beispielsweise Windkraftanlagen oder großbauende Lager von Baumaschinen oder Werkzeugmaschinen.

### Bezugszeichenliste

- 1, 1.1, 1.2, ..., 1.n: Gleit-Magnetkörper
- 2, 2.1, 2.2, ..., 2.n: Element aus Gleitlagerwerkstoff
- 3, 3.1, 3.2, ..., 3.n: Permanentmagnet
- 4, 4.1 ,4.2: Tragkörper
- 5: Lagerspalt
- 6, 6.1, 6.2: Gleitfläche
- 7: Ausnehmung
- 8: Flansch
- 9,9.1 ... 9.n: weichmagnetisches Element
- 20: elastisches Element
- 30: Kontur der Gleitfläche
- 40: erste Teilkomponente des Tragkörpers
- 41: zweite Teilkomponente des Tragkörpers
- 42: Befestigungsmittel
- 50: Schmiermittelpumpe
- 51, 52: Schmiermittelleitungen
- 60: Dämpfungselement
- 61, 62: gummielastischer Körper
- 63: Stempelkörper
- 65: Nabe
- 66: Wasserturbine
- 68.1, 68.2: Schräglager
- 70: Generatorläufer
- 80: Generatorstator
- 90.1,90.2: Wälzlager
- 95: Bund
- 96: Ringnut
- 100: Wasserturbinenwelle
- 200: Gondelgehäuse
- 300: Radiallager
- 400: Axiallager

## Patentansprüche

1. Hybridlager, umfassend
a. eine erste Lagerschale mit einem ersten Tragkörper (4.1) und einer ersten Gleitfläche (6.1);
b. eine zweite Lagerschale mit einem zweiten Tragkörper (4.2) und einer zweiten Gleitfläche (6.2), wobei die erste Gleitfläche (6.1) und die zweite Gleitfläche (6.2) an einem Lagerspalt (5) einander gegenüberliegend ein Gleitlager bilden; **gekennzeichnet durch**
c. eine Vielzahl von Gleit-Magnetkörpem (1.1, ..., 1.n), die in Ausnehmungen im ersten Tragkörper (4.1) und/oder dem zweiten Tragkörper (4.2) eingesetzt sind und die wenigstens einen Teil der ersten Gleitfläche (6.1) und der zweiten Gleitfläche (6.2) als segmentierte Gleitflächen ausbilden,
d. wobei jeder Gleit-Magnetkörper (1.1, ..., 1.n) ein Element aus Gleitlagerwerkstoff (2.1,..., 2.n) und einen gegenüber der zugeordneten Gleitfläche beabstandet angeordneten Permanentmagnet (3) umfasst, die zu einer Baueinheit verbunden sind und
e. wobei die zum Lagerspalt (5) hinweisende Fläche des Elements aus Gleitlagerwerkstoff (2.1, ..., 2.n) stufenfrei in die übrige Gleitfläche eingelassen ist, die **durch** ein Material des Tragkörpers (4.1, 4.2) gebildet wird.

2. Hybridlager nach Anspruch 1, **dadurch gekennzeichnet, dass** die erste Gleitfläche (6.1) und/oder die zweite Gleitfläche (6.2) eingeschliffen sind.

3. Hybridlager nach wenigstens einem der Ansprüche 1 oder 2, **dadurch gekennzeichnet, dass** der Permanentmagnet (3.1,...,3.n) vollständig von einem Element aus Gleitlagerwerkstoff (2.1, ..., 2.n) umhüllt wird.

4. Hybridlager nach einem der vorhergehenden Ansprüche, **dadurch gekennzeichnet, dass** das Element aus Gleitlagerwerkstoff (2.1, ..., 2,n) stoffschlüssig mit dem Permanentmagnet (3.1,..,3.n) verbunden ist.

5. Hybridlager nach Anspruch 4, **dadurch gekennzeichnet, dass** der Stoffschluss durch Verkleben oder Sintern erreicht wird.

6. hybridlager nach einem der vorhergehenden Ansprüche, **dadurch gekennzeichnet, dass** der Gleit-Magnetkörper (1.1,..., 1.n) am zugeordneten Tragkörper durch Formschluss und/oder Kraftschluss und/oder Stoffschluss gehalten wird.

7. Hybridlager nach einem der vorhergehenden Ansprüche, **dadurch gekennzeichnet, dass** das Element aus Gleitlagerwerkstoff (2.1,..., 2.n) ein Keramikelement und besonderes bevorzugt ein faserverstärktes Keramikelement umfasst.

8. Hybridlager nach einem der vorhergehenden Ansprüche, **dadurch gekennzeichnet, dass** der Permanentmagnet (3.1,...,3.n) seltene Erden und bevorzugt Kobalt-Samarium- oder Neodynium-Eisen-Bor umfasst.

9. Hybridlager nach wenigstens einem der vorausgehenden Anspruche, **dadurch gekennzeichnet, dass** im Lagerspalt (5) bevorzugt mittels einer schmiermittelpumpe (50) ein Schmiermittel eingebracht wird.

10. Hybridlager nach wenigstens einem der vorausgehenden Ansprüche, **dadurch gekennzeichnet, dass** as Hybridlager ein Dämpfungselement (50) umfasst.

11. Tauchende Energieerzeugungsanlage mit einem Hybridlager nach wenigstens einem der vorausgehenden Ansprüche.

12. Tauchende Energieerzeugungsanlage nach Anspruch 11, umfassend eine auf einer Nabe (65) gehalterte Wasserturbine, die zum Direktantrieb eines elektrischen Generators dient, wobei das Hybridlager als Radial- und/oder Axiallager der Nabe (65) verwendet wird.

13. Herstellungsverfahren für ein Hybridlager mit einer ersten und einer zweiten Lagerschale, die am Lagerspalt (5) einander zugewandte Gleitflächen (6.1, 6.2) umfassen, mit den folgenden Verfahrensschritten:
a. Herstellung eines ersten Tragkörpers (4.1) für die erste Lagerschale und eines zweiten Tragkörpers (4.2) für die zweite Lagerschale;
b. Herstellung einer Vielzahl von Gleit-Magnetkörpern (1.1, ..., 1,n) durch die Verbindung eines Elements aus Gleitlagerwerkstoff (2.1, ..., 2.n) mit einem Permanentmagneten (3.1,...,3.n);
c. Einsetzen der Gleit-Magnetkörper (1.1,..., 1.n) in Ausnehmungen an den Tragkörpern (4.1, 4.2), wobei ein Teil des Elements aus Gleitlagerwerkstoff (2.1, ..., 2.n) in Richtung des Lagerspalts (5) weist und ein Segment der Gleitflächen (6.1, 6.2) bildet und
d. wobei die zum Lagerspalt (5) hinweisende Fläche des Elements aus Gleitlagerwerkstoff (2.1, ..., 2.n) stufenfrei in die übrige Gleltflärhe (6.1, 6.2) eingelassen ist, die durch ein Material des Tragkörpers (4.1, 4.2) gebildet wird.

14. Verfahren nach Anspruch 13, **dadurch gekennzeichnet, dass** die Gleit-Magnetkörper (1.1, ..., 1.n) durch eine stoffschlüssige Verbindung des Permanentmagneten (3.1,...,3.n) und des Elements aus Gleitlagerwerkstoff (2.1, ..., 2.n) hergestellt werden,

15. Verfahren nach Anspruch 14, **dadurch gekennzeichnet, dass** das Element aus Gleitlagerwerkstoff (2.1, ..., 2.n) und der Permanentmagnet (3.1,...,3.n) getrennt voneinander hergestellt und mittels eines Klebeverfahrens verbunden werden.

16. Verfahren nach wenigstens einem der Ansprüche 14 oder 15, **dadurch gekennzeichnet, dass** das Element aus Gleitlagerwerkstoff (2.1, ..., 2.n) ein Keramikelement ist.

17. Verfahren nach Anspruch 18, **dadurch gekennzeichnet, dass** das Keramikelement und der Permanentmagnet (3.1,...,3.n) mittels eines gemeinsamen Sinterverfahrens verbunden werden.

18. Verfahren nach Anspruch 16, **dadurch gekennzeichnet, dass** der Permanentmagnet (3.1,...,3.n) ein polymerbasiertes Matrixmaterial umfasst und im plastischen Zustand in eine Ausnehmung des Elements aus Gleitlagerwerkstoff (2.1, ..., 2,n) eingebracht wird.

19. Verfahren nach wenigstens einem der Ansprüche 13 -18, **dadurch** gekenntzeichnet, dass nach der Verbindung des Permanentmagneten (3.1,...,3.n) mit dem Element aus Gleitlagerwerkstoff (2.1, ..., 2.n) mittels eines äußeren Magnetfelds eine Magnetisierung des Permanentmagneten (3.1,...,3.n) vorgenommen wird.

## Claims

1. A hybrid bearing, comprising
a. a first bearing shell with a first support body (4.1) and a first sliding surface (6.1);
b. a second bearing shell with a second support body (4.2) and a second sliding surface (6.2), wherein the first sliding surface (6.1) and the second sliding surface (6.2) are opposite one another on a bearing gap (5) and form a slide bearing;
**characterised by**
c. a plurality of sliding magnetic bodies (1.1,..., 1.n), which are inserted in recesses in the first support body (4.1) and/or the second support body (4.2) and which form together at least one portion of the first sliding surface (6.1) and of the second sliding surface (6.2) as segmented sliding surfaces,
d. whereas each sliding magnetic body (1.1... 1.n) includes an element made of a slide bearing material (2.1,..., 2.n) and a permanent magnet (3) which is spaced apart with respect to the associated sliding surface, which are joined into a module and
e. wherein the surface of the element made of a slide bearing material (2.1..., 2.n) and facing towards the bearing gap (5) is embedded in a step-free manner in the remaining sliding surface, which consists of a material of the support body (4.1, 4,2).

2. A hybrid bearing according to claim 1, **characterised in that** the first sliding surface (6.1) and/or the second sliding surface (6.2) are ground in.

3. A hybrid bearing according to one of the claims 1 or 2, **characterised in that** the permanent magnet (3.1,..., 3.n) is enclosed completely by an element made of a slide bearing material (2.1,..., 2.n).

4. A hybrid bearing according to any of the preceding claims, **characterised in that** the element made of a slide bearing material (2.1,...., 2.n) is bonded with the permanent magnet (3.1,...,3.n) by polymerisation.

5. A hybrid bearing according to claim 4, **characterised in that** the material bonding is achieved by gluing or sintering.

6. A hybrid bearing according to any of the preceding claims, **characterised in that** the sliding magnetic body (1.1,...., 1.n) is maintained on the associated support body by interlocking and/or positive engagement and/or material bonding.

7. A hybrid bearing according to any of the preceding claims, **characterised in that** the element made of a slide bearing material (2.1,..., 2.n) includes a ceramic element and particularly preferably a fibre-reinforced ceramic element.

8. A hybrid bearing according to any of the preceding claims, **characterised in that** the permanent magnet (3,1,...,3.n) includes rare earths and preferably cobalt-samarium-boron or neodymium-iron-boron.

9. A hybrid bearing according to at least one of the preceding claims, **characterised in that** a lubricant is injected in the bearing gap (5) preferably by means of a lubricant pump (50).

10. A hybrid bearing according to at least one of the preceding claims, **characterised in that** the hybrid bearing includes a damping element (50).

11. An underwater power generation plant with a hybrid bearing according to at least one of the preceding claims.

12. An underwater power generation plant according to claim 11, comprising a water turbine held on a hub (65), which turbine is used for directly driving an electric generator, wherein the hybrid bearing is employed as a radial and/or axial bearing of the hub (65).

13. A production method for a hybrid bearing with a first and a second bearing shell, which include sliding surfaces (6.1, 6.2) facing one another on the bearing gap (5), with the following method steps:
a. Production of a first support body (4,1) for the first bearing shell and of a second support body (4.2) for the second bearing shell;
b. Production of a plurality of sliding magnetic bodies (1.1, .... 1.n) by the connection of an element made of a slide bearing material (2.1,..., 2.n) with a permanent magnets (3.1,...,3.n);
c. Attachment of the sliding magnetic bodies (1.1,..., 1.n) in recesses on the support bodies (4.1, 4.2),whereas a portion of the element made of a slide bearing material (2.1,..., 2.n) points out to the bearing gap (5) and forms a segment of the sliding surfaces (6.1, 6.2) and
d. wherein the surface of the element made of a slide bearing material (2.1..., 2.n) and facing towards the bearing gap (5) is embedded in a step-free manner in the remaining sliding surface, which consists of a material of the support body (4.1, 4.2).

14. A method according to claim 13, **characterised in that** the sliding magnetic bodies (1.1,..., 1.n) are provided by a materially bonded connection of the permanent magnets (3.1,..., 3.n) and of the element made of a slide bearing material (2.1, ..., 2.n).

15. A method according to claim 14, **characterised in that** the element made of a slide bearing material (2.1,...., 2.n) and the permanent magnet (3.1,..., 3.n) are produced separately from one another and are joined by means of a gluing process.#

16. A method according to at least one of the claims 14 or 15, **characterised in that** the element made of a slide bearing material (2.1,..., 2,n) is a ceramic element.

17. A method according to claim 18, **characterised in that** the ceramic element and the permanent magnet (3,1,...,3.n) are joined by means of a common sintering method.

18. A method according to claim 16, **characterised in that** the permanent magnet (3.1,...,3.n) includes a polymer-based matrix material and is introduced in plastic state into a recess of the element made of a slide bearing material (2.1,..., 2.n).

19. A method according to at least one of the claims 13-18, **characterised in that** the permanent magnet (3.1,...,3.n) is magnetised after connection of the . permanent magnet (3.1,..., 3.n) with the element made of a slide bearing material (2.1,..., 2.n) by means of an external magnetic field.

## Revendications

1. Palier hybride, comprenant
a. un premier coussinet de palier pourvu d'un premier corps support (4.1) et d'une première surface de glissement (6.1);
b. un second coussinet de palier pourvu d'un second corps support (4.2) et d'une seconde surface de glissement (6.2) dans lequel la première surface de glissement (6.1) et la seconde surface de glissement (6.2) sont opposés l'un à l'autre sur une entretoise de palier (5) et constituent un palier de glissement;
**caractérisé par**
c. une pluralité de corps magnétiques de glissement (1.1,..., 1.n), qui sont introduits dans des évidements dans le premier corps support (4.1) et/ou le second corps support (4.2)et qui constituent au moins une partie de la première surface de glissement (6.1) et de la seconde surface de glissement (6.2) comme surfaces de glissement segmentées,
d. dans lequel chaque corps magnétique de glissement (1.1,... 1.n) comprend un élément constitué d'un matériau de palier de glissement (2.1,..., 2.n) et un aimant permanent (3) espacé par rapport à la surface de glissement associée, qui sont reliés pour former un module et
e. dans lequel on introduit la face de l'élément constitué d'un matériau de palier de glissement (2.1..., 2.n) et faisant face à l'entretoise de palier (5), de manière continue dans la surface de glissement restante, qui est constituée d'un matériau du corps support (4.1, 4,2).

2. Palier hybride selon la revendication 1, **caractérisé en ce que** la première surface de glissement (6.1) et/ou la seconde surface de glissement (6.2) sont rectifiées à la meule.

3. Palier hybride selon l'une au moins des revendications 1 ou 2, **caractérisé en ce que** que l'aimant permanent (3.1,..., 3.n) est complètement entouré d'un élément constitué d'un matériau de palier de glissement (2.1,..., 2.n).

4. Palier hybride selon l'une quelconque des revendications précédentes, **caractérisé en ce que** que l'élément constitué d'un matériau de palier de glissement (2.1,..., 2.n) est solidaire de l'aimant permanent (3.1,..,3.n) par polymérisation.

5. Palier hybride selon la revendication 4, **caractérisé en ce que** l'on obtient la polymérisation par collage ou frittage.

6. Palier hybride selon l'une quelconque des revendications précédentes, **caractérisé en ce que** le corps magnétique de glissement (1.1,..., 1.n) est maintenu sur le corps support associé par clabotage et/ou adhérence et/ou polymérisation.

7. Palier hybride selon l'une quelconque des revendications précédentes, **caractérisé en ce que** l'élément constitué d'un matériau de palier de glissement (2.1,..., 2.n) comprend un élément céramique et de préférence particulière un élément céramique renforcé de fibres.

8. Palier hybride selon l'une quelconque des revendications précédentes, **caractérisé en ce que** l'aimant permanent (3,1,...,3.n) comprend des terres rares et de préférence du cobalt-samarium-bore ou néodyme-fer-bore.

9. Palier hybride selon l'une quelconque au moins des revendications précédentes, **caractérisé en ceque** l'on injecte un lubrifiant dans l'entretoise de palier (5) de préférence à l'aide d'une pompe de lubrification (50).

10. Palier hybride selon l'une quelconque au moins des revendications précédentes, **caractérisé en ce que** le palier hybride comprend un élément amortisseur (50).

11. Unité immergée de production d'énergie pourvue d'un palier hybride selon l'une quelconque au moins des revendications précédentes.

12. Unité immergée de production d'énergie selon la revendication 11, comprenant une turbine à eau maintenue sur un moyeu (65), servant à l'entraînement direct d'un générateur électrique,alors que l'on utilise le palier hybride comme palier radial et/ou axial du moyeu (65).

13. Procédé de fabrication pour palier hybride avec un premier et un second coussinet de palier, qui comprennent des surfaces de glissement (6.1, 6.2) tournées l'une vers l'autre sur l'entretoise de palier (5), comprenant les phases de procédé suivantes :
a. Fabrication d'un premier corps support (4,1) pour le premier coussinet de palier et d'un second corps support (4.2) pour le second coussinet de palier; -
b. Fabrication d'une pluralité de corps magnétiques de glissement (1.1,..., 1,n) par la liaison d'un élément constitué d'un matériau de palier de glissement (2.1,..., 2.n) avec un aimant permanent (3.1,...,3.n);
c. Encastrement des corps magnétiques de glissement (1.1,...,1.n) dans des évidements sur les corps supports (4.1, 4.2), alors qu'une partie de l'élément constitué d'un matériau de palier de glissement (2.1,..., 2.n) est dirigé vers l'entretoise de palier (5) et constitue un segment des surfaces de glissement (6.1, 6.2) et
d. dans lequel on introduit la face de l'élément constitué d'un matériau de palier de glissement (2.1..., 2.n) et faisant face à l'entretoise de palier (5), de manière continue dans la surface de glissement restante,qui est constituée d'un matériau du corps support (4.1, 4.2).

14. Procédé selon la revendication 13, **caractérisé en ce que** l'on obtient les corps magnétiques de glissement (1.1,...,1.n) grâce à une liaison par polymérisation de l'aimant permanent (3.1,...,3.n) et de l'élément constitué d'un matériau de palier de glissement 2.1,...,2.n).

15. Procédé selon la revendication 14, **caractérisé en ce que** l'élément constitué d'un matériau de palier de glissement (2.1,...,2.n) et l'aimant permanent (3.1,...,3.n) sont produits séparément l'un de l'autre et reliés à l'aide d'un procédé de collage.

16. Procédé selon l'une au moins des revendications 14 ou 15, **caractérisé en ce que** l'élément constitué d'un matériau de palier de glissement (2.1,..., 2.n) est un élément céramique.

17. Procédé selon la revendication 18, **caractérisé en ce que** l'élément céramique et l'aimant permanent (3,1,...,3.n) sont reliés par un procédé de frittage commun.

18. Procédé selon la revendication 16, **caractérisé en ce que** l'aimant permanent (3.1,...,3.n) comprend un matériau matriciel à base polymère et est encastré à l'état plastique dans un évidement de l'élément constitué d'un matériau de palier de glissement (2.1,..., 2.n).

19. Procédé selon l'une au moins des revendications 13-18, **caractérisé en ce que** l'on réalise la magnétisation de l'aimant permanent (3.1,...,3.n) après liaison de l'aimant permanent (3.1,...,3.n) avec l'élément constitué d'un matériau de palier de glissement (2.1,...,2.n) à l'aide d'un champ magnétique externe.
